# EUROPEAN PATENT SPECIFICATION

(11) **EP 1 018 301 B1**
(45) Date of publication and mention of the grant of the patent: **23.04.2003**
(21) Application number: 99500003.1
(22) Date of filing: 08.01.1999
(51) Int. Cl.: A22C 13/00

(54) **Non-edible collagen casing ready-to-stuff**
Nichtessbare füllfertige Kollagenhülle
Enveloppes non-comestibles en collagène, pouvant être bourrées

(43) Date of publication of application: 12.07.2000
(73) Proprietor: Naturin GmbH & Co, D-69469 Weinheim (DE)
(72) Inventor: Sanchez, Javier, Gamex A.S., 370 21 Ceské Budéjovice (CZ); Hnizdil, Milos, Gamex A.S., 370 21 Ceské Budéjovice (CZ); Aigner, Michael, Naturin GmbH & Co, 69469 Weinheim (DE); Knörzer, Ernst, Naturin GmbH & Co, 69469 Weinheim (DE); Maser, Franz, Naturin GmbH & Co, 69469 Weinheim (DE)
(74) Representative: Carpintero Lopez, Francisco

(56) References cited:
- WO-A-94/07372
- FR-A- 1 483 239
- FR-A- 2 550 920
- GB-A- 2 019 344

## Description

### FIELD OF THE INVENTION.

The present invention refers to non-edible collagen casings for foodstuffs which do not have to be soaked in water or brine by the meat packer before stuffing, as well as to the process for preparing them.

### BACKGROUND OF THE INVENTION.

Collagen casings for foodstuffs have been used for a long time in the production of sausages as a substitution of natural casings. They are made of collagen obtained from bovine hides. Collagen of that origin is extruded to form a continuous tube. Said tube is, then, cross-linked, dried to obtain a predetermined level of moisture and reeled.

Those reels are converted to give the collagen product the desired length and characteristics adapted to meat packers and final customers' needs. Converting can be made by shirring, tying, cutting, bundling or printing. Depending on the customer requirements, one or more of these operations are performed before delivering the casing to the sausage maker.

The reels as intermediate stock are used by the collagen casing manufacturer as a buffer separation of what is a continuous process of extrusion which is, per se, non flexible and continuous from what is a discontinuous process that intends to make the product "tailor made" adapted to customers needs.

Processes for production of these casings are described in US 3,235,641, US 3,579,358 and US 3,930,035. European patent 969017748.

Collagen casings may be edible or non-edible, the distinction being that non-edible casings are of higher diameter and they are normally peeled before the sausage encased therein is consumed. These casings are, normally, of a thicker wall than the edible ones and are not eaten because of their unpleasant mouthfeel.

Non-edible collagen casings may be designed for cooked sausages or may be developed for dry sausage manufacture. One of the main differences between these two kinds is the degree of crosslinking of the collagen. A common requirement for both types of casings is their capability to stand the stuffing/clipping procedure. However, while casings for cooked sausage manufacture must be fairly highly crosslinked to stand the hydrothermal attack in the cooking cycle, the main feature of a dry sausage casing is its capability to follow the volume reduction of the dry sausage emulsion due to loss of water in the course of the curing process. This latter property is best achieved if the degree of crosslinking of the collagen is not too high.

The distinction between edible and non-edible casings also affects the way in which these products are used when stuffing. Edible collagen casings are stuffed directly without any prior preparation by the meat packer. Non-edible collagen casings are, normally, soaked in tap water or, preferably, in brine prior to stuffing in order to give them the necessary flexibility, as dry casings tend to be too brittle and may burst on stuffing and /or clipping.

This pre-soaking step before stuffing has subsequent possibility of incurring in additional errors e.g, lack of control in the salt concentration, lack of temperature control in the soaking medium and of the exposure time required.

As the origin of collagen casings is the intention to replace the use of natural ones, the market has requested also more "natural like" casings. To satisfy this demand, it has further been developed a type of curved casing ("Round") to make it similar to certain types of natural casings. Round casings are made in the edible and non edible versions of collagen casings.

Further problems associated with the non-edible collagen casings known in the art are those related to hygiene conditions in the soaking and stuffing areas, which are not so good as desirable, as additional cleaning is required in the stuffing area and the spilling of water and brine is substantial. The costs involved in the stuffing step of these collagen casings for the meat packer are high as more salt, more water and more time are required.

Several prior art documents are directed to the solving of problems associated with the necessity of having a certain humidity degree in the different types of casings before stuffing, and suggested methods to overcome such problems, specially mold problems. But most of these previous patents are either related to cellulosic casings which are different from collagen ones, or the problems to be solved are rather associated with the moisturizing step, but in connection with the inhibition of mold or fungi development in the casings. None of these patents are directly related to non-edible collagen casings and the problem of making them ready to be filled without presoaking.

US-4,867,204 describes a method of manufacturing a large size tubular cellulosic food casing suitable for being stuffed without the requirement of an additional moisturizing step prior to stuffing. Such method comprises the steps of providing a large size tubular cellulosic food casing including a plasticizer, adjusting the moisture content of the casing in order to make a flexible and extensible casing and treating the same with an antimycotic agent. According to this patent the moisture level can exceed 20% and is of about 5% to 10% prior to the sample be moisturized. It is indicated that manufacturing standards require that casings be produced within a predetermined range of moisture contents and this range is generally from about 17.5% to about 27% . The higher level had been used so far as the target value, in order to allow for expected loss of moisture during handling and storage. Although the lower limit was important there was no upper limit and this was mostly determined by economic considerations. However moisture levels over 35 % may adversely affect the desirable properties of the casing for certain applications. In this patent the moisture range claimed is from at least 20 % up to about 35 % by weight of the casing. The way of imparting moisture is by treating the casing with an aqueous solution of a compound as propylene glycol. Examples are disclosed with water contents up to 45.9 % but in these cases mold growth is developed. Therefore, this patent discloses a method suitable for cellulosic casings, but not for collagen ones; furthermore the necessity of adding an antimycotic agent increases the costs involved in the process, and also the addition of a chemical agent to the product is not a desirable aspect from the health and the ecological points of view.

CA-433,644 describes improvements in the treatment of animal intestines for use as sausages casings, and particularly describes a process for treating, preserving and packing sausage casings. A preserving solution is used which is added to the cans or other containers used for shipping and storage purposes. Said solution, composed of boiled water with 15 % to 20 % of fine salt and a compound as sodium nitrate (1% to 2%) or sodium benzoate, is added to the can once filled with the casings, after having been cooled.

It is stated that the casings are preserved in a fresh condition for extended periods of time without the need of refrigeration. There is in this method an essential disadvantage as is the transport of the casings, which has to be carried out with the casings introduced in the preserving solution with the corresponding space and cost increase. The solution proposed in this patent is rather intended for solving problems associated with the transport during large time periods, as by water, and the subsequent spoilage of casings due to heat, rust and salt-burn.

CA-902421 refers to a method for inhibiting fungus growth on edible collagen sausage casings through the incorporation, thereon or therein, of an edible, at least partially water soluble antimycotic agent. Said antimycotic is added during the casing manufacture, in the final plasticizing bath or applied during shirring in an aqueous solution fed into contact with the casing at a predetermined rate subsequent to removal from the storage reel and previous to removal from the shirring process. Hide collagen, either from limed or unlimed hides, is preferred. In the method claimed in this patent sufficient water is added to the casing before, during or after shirring to provide a resultant fungi growth resistant casing with a moisture content in the range of from about 14 % to about 22 % by weight. Moreover, the addition of a wetting agent is considered to facilitate the rapid distribution of water. Therefore, the essential object of this patent is to avoid the fungus growth on edible collagen casings, and for this purpose the addition of antimycotic agents such as an aqueous solution of a low alkyl ester of p-hydroxybenzoic acid, is the proposed solution.

US-3,981,046 describes food casings, particularly cellulosic sausage casings, which are moisturized during the conventional shirring operation by applying to the interior of the casing an aqueous humectant solution containing sufficient humectant to retard excessive imbibition of water by the casing. In the case of cellulosic casing when they are first formed, it was necessary that they dried to a relatively low water content, in the range of about 8 to 11%. A too low or a too high water content is not desirable, since a too low one produces damage during the shirring operation and a too high one may results in sticking of the casing to the shirring machine. The rapid extension of the casing during stuffing requires the casing to be resistant to tearing. It is also described that if the shirred casing has a moisture content appreciably less than 14 % there is a tendency to excessive breaking during stuffing, and if the casing has a moisture content over 17 % the casing is too plastic and may be overstuffed. The means for imparting moisture according to this patent are aqueous solutions of, for example, 25 % propylene glycol and 75 % water, or glycerol diacetate and water, among others. As mentioned above, this patent refers to cellulosic casings and the proposed means for moisturizing them are aqueous solutions of the well known polyols.

US-3,617,312 describes cellulose sausage casings protected against fungus growth, wherein the resistance to said fungus growth is achieved through overcoating with a partially water swellable, water insoluble, water- and gas-permeable coating composition containing an antimycotic agent. It is stated that the main object of the invention is to provide a long-lasting antimycotic treatment for cellulose casings. Therefore the obtention of a casing with a specific moisture degree is not the result of a research focused with the aim of providing a ready-to-stuff casing more easy to handle by the meat packer, but only a result of secondary relevance associated to the anti-fungi treatment.

US-4,062,981 is directed to the solution of the moisturizing problem of sausage casings. It discloses an improvement for humidifying artificial sausage casings by applying a moisture-providing liquid consisting of a mixture of water and from about 0.5 % to about 5 % of relatively viscous surfactant to the internal wall of the casing . The casing is subsequently shirred.

US-5,554,401 describes a wet edible collagen casing, with moisture content of 50 % to 90% by weight, that has mechanical properties allowing the casing to be filled in its wet state and being packed ready for use.

That patent refers to an edible collagen casing treated with a salt solution to remove water and to reduce wall thickness and which is packed in its wet state. The aim is to provide a wet casing with sufficient strength to be used in the wet state. It intends to produce the casing with lower energy cost as it is not being dried by hot air, as in the conventional production process. To obtain such a result the patent includes storage of the wet casing in brine or, alternatively, hermetically sealing of the product.

Therefore, in the previously discussed prior art several problems remain unsolved concerning the suitable moisture amount of collagen food casings and the control thereof. In some cases the moisturizing treatment is only described for cellulosic casings, but not for collagen ones. In other cases the moisturizing step is not separated from the addition of an antimycotic agent being this last aspect the main object of the invention disclosed. Other patents are more concerned with the long period storage and transport, but in no case a solution is disclosed or suggested for providing a non-edible ready-to-stuff collagen casing. Those that refer to collagen casings are only referred to edible casings that are packed in their wet state.

Furthermore, an essential step during preparation of sausages with collagen casings is the stuffing / clipping process. It has been demonstrated that the control of moisture both in the amount as well as in the distribution of moisture through the casing, is of great importance during stuffing, as every time that a breakage is produced in the casing the stuffing process is interrupted.

High moisture casings as those described in US5,554,401 need specific and expensive storage conditions due to their humidity level, which is much higher than the humidity level of the casings according to the present invention and their production is less flexible, because the casing is converted and packaged in its final form. Production and finishing are predetermined and the flexibility given by intermediate stock is lost.

Casing moisture has been found to be a factor in control of uniformity, as well as in meeting the continuing need to readily and economically stuff the casings without breaking. Moreover, in some of the methods disclosed so far there is not a rigorous control by the manufacturer of the moisture level and moisture maintenance in the casings.

Solutions were tried for non-edible collagen casings by treating them as edible ones. However, non-edible collagen Rounds humidified to a humidity level typical for edible collagen casings (e.g. about 21 % to 25 %) do not perform well in stuffing / clipping.

It was further shown that, apparently, the transition from bad to good stuffing / clipping performance of non-edible collagen casings takes place somewhere in the range between 25 % and 100 % of absolute casing humidity. These problems are now solved with the casing of the present invention.

Due to the previous reasons there is a need in the market of a non-edible collagen casing which can be provided by the manufacturer with the correct moisture amount to avoid additional treatments before stuffing, which can be stored for a large time period and overcomes all the mentioned problems.

### DESCRIPTION OF THE INVENTION

This invention refers to non-edible collagen casings of the straight and round forms and covers those casings manufactured to produce dry sausages and those for cooked sausages.

It is an object of the present invention to provide non-edible collagen casings which solve the existing problems concerning the necessity of previous moisturizing treatment by the meat packer before stuffing, and therefore, with the appropriate moisture amount, said casings being provided by the casing manufacturer with a total warranty regarding the moisture control, to avoid further difficulties and additional operational errors by the sausage producer.

It is an additional object of the present invention to provide non-edible appropriately moisturized collagen casings which do not need additional moisturizing treatment in order to avoid errors during the soaking treatment by the sausage maker, which would lead to incorrect soaking conditions as the lack of temperature control, brine concentration control and exposure time control.

It is another object of the present invention to provide a method of manufacturing said non-edible collagen casings which avoids an additional soaking step by the consumer, therefore resulting in time saving, cost saving due to renunciation of salt and water and to the splashing of salt and water around the stuffing place, as well as to more hygienic process as no spilling of water or brine in the stuffing area is produced, less cleaning is required in the stuffing area; and finally the hazard of skin irritation is avoided and less spatial requirements (for a soaking bath) are needed.

It is a further object of the invention to provide a non-edible collagen casing manufactured in the usual manner: i.e. air drying the casing before reeling and that attains the appropriate humidity level in a further step at the casing manufacturing plant.

It is another object of the present invention to provide a process of producing a non-edible collagen casing which is manufactured starting from the conventional reel condition so as to obtain the highest flexibility in the production process.

All these advantages make the stuffing process less expensive, more comfortable for the operator and shorter in time and such advantages are obtained with no change of the conventional production process and no higher costs in investments and/or packing methods.

In the development of the present invention many factors were taken into account, as ready-to-stuff casings would have to fulfill the following requirements: compliance with the legal regulations for such products; stuffing / clipping performance at least as good as that of a standard casing soaked under appropriate conditions; shelf life of the casing at least a year without significant change of properties (as characterized by analytical parameters and performance in application) and flexibility in the production process not determining the final converting form from the beginning of the process, at the extrusion level.

There is a need to adjust the appropriate casing humidity in Converting, in order to provide a ready-to-stuff casing.

According to the present invention a ready-to-stuff non-edible collagen casing is provided which is characterized by a composition including a moisture amount between 27 % and 49 % by weight, and a salt amount determined by the salt concentration used in the presoaking aqueous solution and the immersion time therein. In a preferred embodiment the moisture amount ranges between 33 % and 40 % by weight.

The ready-to-stuff casings provided in the present invention are non-edible collagen casings which are presoaked in water or in an aqueous solution of a salt the use of which complies with food and commodity regulations before packing. In a most preferred embodiment the casings are presoaked in a sodium chloride aqueous solution with a concentration between 5% and 25% of sodium chloride, and preferably between 10% and 20%.

The immersion time in the salt solution can be very wide, but preferably ranges between 2 and 60 seconds, and more preferably it ranges between 5 and 30 seconds.

In an alternative embodiment of the present invention the collagen casings are moisturized in a humidification chamber for a determined time period, which can range between minutes and several days, at a temperature between 10 °C and 40 °C, and preferably at about 25°C, and with a predetermined relative humidity between 80 % and 99%, and preferably of 90 %.

The applicability of the ready-to-stuff approach is not limited to Rounds and to casings for cooked sausages but may be extended to straight non-edible collagen casings (Middles) and to dry sausage casings

To support this extension, there were prepared ready-to-stuff samples of a typical straight non-edible designed for dry sausage manufacture. Based on the experience made with ready-to-stuff samples of Rounds developed for cooked sausages (Examples 1-4) the test series for Middles could be simplified (Example 5).

The results obtained prove the general use of the ready-to-stuff principle for both curved and straight non-edibles, but also for dry sausage casings as well as casings developed for cooked sausage manufacture.

Once the invention proved to be valid for Middles and Rounds, tests were made to determine the absorption of salt by the casing during the pre-soaking process. Such level of salt was determined through analysis of the ash content of the casings.

The ash contents, determined at 600 °C / 6 hours, of the KD 43 (a Round type casing) ready-to-stuff samples were found to be in the range between 7.1 % and 10.5 % (based on dry casing). The ash content of the control casing was determined in the same way and found to be in the range of 1.4 %. Therefore, we have to consider an uptake of sodium chloride (due to immersion in brine) between 5.7 % and 9.1 %.

In a similar way the ash contents found in the ready-to-stuff samples of SR-R2L 47 (a Middle-type casing) ranged between 6.9 % and 12.6 %. As the ash content of the (non-soaked) control casing was found to be 1.3 %, the sodium chloride content of the ready-to-stuff samples must be expected in the range of 5.6 % - 11.3 %, depending on the conditions of sample preparation (brine concentration, and time of immersion).

The casings prepared according to the present invention were analyzed and tested concerning the breaking during stuffing and clipping, and have proved to perform at least as well as the standard non-edible collagen casings soaked in brine prior to stuffing, used so far. The behavior concerning the breakage during stuffing/clipping is excellent.

Cooking tests at various temperatures and time periods were also carried out with a wide pallet of casings manufactured according to the present invention showing in most cases neither damages like cuts close to the clip during cooking nor longitudinal splits (which are frequently caused by invisible predamages ocurring in the clipping process).

Ready-to-stuff collagen casings manufactured according to the present invention were analyzed and their application properties continuously studied during a six month period, and it was found that the analytical data fluctuate in the order of magnitude of the experimental error; whereas the stuffing/clipping performance remained unchanged.

This invention will be more clear when considering the following examples which are merely illustrative and, in no manner, are to be considered as limitative of the present invention.

### EXAMPLE 1

Control casings were used consisting of calibre 43 mm, standard non-colored Naturin Round shirred (15 m) casings, with a stick length of 42 cm. A netting was used to stabilize the shape of the stick.

The casings were fully analyzed and tested according to standard Naturin Feischwurst (bologna) test cycle described in Example 3 below. Stuffing and clipping were carried out after standard soaking procedure and cooking was ocurred at 76°C and 78°C.

### EXAMPLE 2

From a pallet of the control casings of Example 1, humidified samples were prepared in the following ways:
Samples A: Sticks immersed in tap water for 5 seconds
Samples B: Sticks immersed in tap water for 10 seconds
Samples C: Sticks immersed in tap water for 15 seconds
Samples D: Sticks immersed in a 10 % solution of sodium chloride in tap water for 5 seconds.
Samples E: Sticks immersed in a 10 % solution of sodium chloride in tap water for 10 seconds.
Samples F: Sticks immersed in a 10 % solution of sodium chloride in tap water for 15 seconds.
Samples G: Sticks exposed to a humidification chamber at 25 °C / 90 % r.h. for 48 h.
Samples H: Sticks exposed to a humidification chamber at 25 °C / 90 % r.h. for 96 h.
Samples I: Sticks exposed to a humidification chamber at 25 °C / 90 % r.h. for 144 h.

Immediately after humidification the sticks were packed in a plastic bag under protective gas (nitrogen / carbon dioxide after removal of oxygen). The internal gas pressure in the plastic packaging was adjusted such as to provide the shape of a cushion to the bag to assure easy handling without damaging the integrity of the sticks.

Samples prepared according to the present Example were tested in a standard stuffing / clipping process using a Handtmann filler equipped with a 24 mm stuffing horn / 24 mm break and a Polyclip FCA 34 11 clipping device operated at maximum speed. The clip size used was 15x9 / 5x1.5. The stuffing diameter was 45.0 mm - 46.0 mm.

The results are shown in Table 1.

**Table 1.**

| Water content and stuffing/clipping performance of samples A-I. | | |
|---|---|---|
| Sample ready-to-stuff | Water Content (%) | % Breakage during Stuffing / Clipping |
| A | 34.8 | 23.1 |
| B | 36.3 | 4.5 |
| C | 37.,3 | 12.5 |
| D | 33.4 | 6.7 |
| E | 37.0 | 6.7 |
| F | 39.6 | 5.0 |
| G | 31.0 | 10.4 |
| H | 36.6 | 11.4 |
| I | 40.3 | 11.4 |
| Control (soaked before stuffing) | not det. | 0 |

Samples D, E and F (all of them presoaked in brine before packing) were the ones to perform best. They almost performed as good as the control casing soaked in brine prior to stuffing / clipping.

### EXAMPLE 3

From a pallet of the control casings according to Example 1, humidified samples were prepared in the following ways:
Samples K: Sticks immersed in a 10 % solution of sodium chloride in tap water for 15 seconds,
Samples L: Sticks immersed in a 20 % solution of sodium chloride in tap water for 15 seconds,
Samples M: Sticks immersed in a 10 % solution of sodium chloride in tap water for 30 seconds,
Samples N: Sticks immersed in a 20 % solution of sodium chloride in tap water for 30 seconds.

The sticks prepared were packed analogous to the way explained in Example 2.

Cooking tests were carried out according to the process illustrated in table 2:

**Table 2.**

| Standard cooking cycle for Fleischwurst (Bologna). | | | | |
|---|---|---|---|---|
| Step | Time (min) | Temp. (°C) | Humidity (%) | Designation |
| 1 | 30 | 65 | low* | Drying |
| 2 | 12 | 68 | low* | Smoking |
| 3 | 60 | 76 or 78 | 99 | Cooking |
| 4 | 60 | < 20 | 99 | Showering |

| | | | | |
|---|---|---|---|---|
| *equilibrium humidity, no addition of humid air | | | | |

The samples prepared according to the present Example were tested in a standard stuffing / clipping process using a Handtmann filler equipped with a 24 mm stuffing horn / 24 mm break and a Polyclip FCA 3411 clipping device operated at maximum speed. The clip size used was 15x9, 5x1.5. The stuffing diameter was 45.0 mm - 46.0 mm. The results are shown in the following Table 3. Table 3. Results of the stuffing/clipping and cooking processes of samples of Example 3.

| Sample ready-to-stuff | Water Content (%) | % Breakage during Stuffing / Clipping | Cooking test (76 °C) based on 25 rings each |
|---|---|---|---|
| K | 35.3 | 0 | 1 longitudinal Split |
| L | 36.0 | 7.4 | Perfect |
| M | 36.0 | 0 | Perfect |
| N | 35.9 | 0 | Perfect |
| Control (soaked before stuffing) | not det. | 0 | 2 small cuts close to the clip |

In general, the results obtained were very satisfactory. For clarification of the repeatability samples were prepared and test were carried out as described in Example 4 below.

### EXAMPLE 4

The control casings used were identical to those described for Examples 1 through 3

Sample Preparation:From a pallet of the control casings, humidified samples were prepared in the following ways:
Samples O: Sticks immersed in a 10 % solution of sodium chloride in tap water for 15 seconds
Samples P: Sticks immersed in a 20 % solution of sodium chloride in tap water for 15 seconds
Samples Q: Sticks immersed in a 10 % solution of sodium chloride in tap water for 30 seconds
Samples R: Sticks immersed in a 20 % solution of sodium chloride in tap water for 30 seconds
Samples S: Sticks immersed in a 15 % solution of sodium chloride in tap water for 20 seconds

The sticks prepared were packed analogous to the way explained in Example 2.

The water content of the resulting casings and the results obtained in a stuffing / clipping test as well as in different cooking tests are shown in Table 4 below.

**Table 4.**

| Water content (%) and results of the stuffing / clipping and cooking tests carried out with the samples described in Example 4. | | | | |
|---|---|---|---|---|
| Sample ready-to-stuff | Water Content (%) | % Breakage during Stuffing / Clipping | Cooking test 76 °C, based on 4 rings each | Cooking test 78 °C, based on 4 rings each |
| O | 39.1 | 0 | 1 tearing | Perfect |
| P | 39.5 | 0 | perfect | Perfect |
| Q | 40.1 | 0 | perfect | Perfect |
| R | 40.7 | 0 | perfect | Perfect |
| S | 43.3 | 0 | perfect | Perfect |
| Control (soaked before stuffing) | not det. | 0 | perfect | 1 small cut close to the clip |

### EXAMPLE 5

Naturin standard Middles for dry sausage manufacture (SR-R2L 47, 20 m shirred, stick length 42 cm, netting), were used as the control casings.

Control casings were fully analyzed and tested by stuffing/clipping with a dry sausage emulsion (T = -2 °C - 0°C) after standard soaking in brine (10 % sodium chloride, 10 minutes, 25 °C).

Based on the experience gained from examples 2 - 4, a fraction of the control casing was modified by immersion in sodium chloride solutions to yield ready-to-stuff samples (see table 5). After immersion the sticks were packed under nitrogen / carbon dioxide atmosphere (analogous to the samples of examples 2 - 4).

The samples obtained were then tested in a stuffing/clipping operation on a Polyclip FCA 3411 at maximum speed. The clip size used was 15x8 / 5x1,5. The emulsion used was a standard dry sausage emulsion with a temperature between -2 °C and 0 °C. The results obtained are summarized in table 5.

**Table 5.**

| Performance of differently prepared ready-to-stuff samples of SR-R2L 47 in a clipping/stuffing operation for dry sausage manufacture | | | | | |
|---|---|---|---|---|---|
| Conc. NaCl (%) | Time of immersion(s) | Casing Humidity (%) | Number of Sausages Stuffed | Stuffing Caliber (mm) | Defects Observed in Stuffing / Clipping (%) |
| 10 | 30 | 49.7 | 10 | 48.0-48.5 | 50 |
| 15 | 30 | 48.5 | 10 | 48.0-49.0 | 10 |
| 20 | 30 | 42.5 | 10 | 47.5-48.5 | 30 |
| 25 | 30 | 41.1 | 15 | 48.5-49.5 | 0 |
| | | | | | |
| 10 * | 600 * | 53,5 * | 5 * | 47,5-48,0 * | 0 * |

| | | | | | |
|---|---|---|---|---|---|
| * Control casing (soaked prior to stuffing/clipping) | | | | | |

The stuffed casings were then processed according to the curing cycle outlined in table 6.

**Table 6.**

| Curing cycle for dry sauvage manufacture | | | | |
|---|---|---|---|---|
| | Process Step | Time (h) | Temperature (°C) | Relative Humidity (%) |
| | Curing I | 24 | 25 | 92 |
| | Smoking* | 24 | Start: 23 End: 20 | Start: 85 End: 80 |
| | Curing II | 456 | 18 | 78 |

| | | | | |
|---|---|---|---|---|
| * Smoke generated from sawdust, then cooled | | | | |

Three weeks after stuffing/clipping the cured products were inspected. There was virtually no difference between the samples and the control. Also, in a sensory test no differences were determined between samples based on ready-to-stuff casings and the control.

## Claims

1. A ready-to-stuff non-edible collagen casing which does not need an additional soaking step before stuffing **characterized in that** it comprises a moisture amount between 27 % and 49 % by weight based on total casing weight and a salt amount between 4 % and 20 % by weight based on dry casing weight, and said salt being compatible with food and commodity regulations.

2. A ready-to-stuff collagen casing according to claim 1, **characterized in that** said salt is sodium chloride.

3. A ready-to-stuff collagen casing according to claims 1 or 2 wherein the moisture amount of the casing ranges between 33 % and 40% by weight, based on total casing weight.

4. A ready-to-stuff collagen casing according to claims 1, to 3 wherein the salt amount of the casing ranges between 6 % and 13 % by weight, based on dry casing weight.

5. A ready-to-stuff collagen casing according to claims 1 to 4 wherein the casing has been vacuum packed or packed under protective gas.

6. A ready-to-stuff collagen casing according to claim 5 wherein the protective gas is, either, carbon dioxide, nitrogen or a mixture of both.

7. A process for manufacturing a ready-to-stuff non-edible collagen casing which does not need an additional soaking step before stuffing, **characterized in that** it comprises soaking the casing in an aqueous salt solution which concentration is between 5 % and 25 % during a period of time between 2 seconds and 60 seconds prior to the packing procedure, and packing the resulting casing.

8. A process for manufacturing a ready-to-stuff non-edible collagen casing according to claim 7 wherein said salt is sodium chloride.

9. A process for manufacturing a ready-to-stuff non-edible collagen casing according to claim 7 wherein the resulting casing contains a moisture amount between 27 % and 49 % by weight, based on total casing weight.

10. A process for manufacturing a ready-to-stuff non-edible collagen casing according claims 7 to 9, wherein the resulting casing contains a moisture amount between 33 % and 40 % by weight based on total casing weight.

11. A process for manufacturing a ready-to-stuff non-edible collagen casing according to claims 7 to 10, wherein the salt concentration in the aqueous salt solution between 10 % and 20 %.

12. A process for manufacturing a ready-to-stuff collagen casing according to claims 7 to 11, wherein the salt uptake by the casing ranges between 5 % and 15 % by weight, based on dry casing weight.

13. A process for manufacturing a ready-to-stuff non-edible collagen casing according to claims 7 to 12, wherein the immersion time of the casings in the salt solution ranges between 5 and 30 seconds.

14. A process for manufacturing a ready-to-stuff collagen casing according to claims 7 to 13, wherein the casing is then vacuum packed or packed under protective gas.

15. A process for manufacturing a ready-to-stuff collagen casing according to claim 14 wherein the protective gas is, either, carbon dioxide, nitrogen or a mixture of both.

## Patentansprüche

1. Nicht essbare, stopffertige Kollagenhülle, die vor dem Stopfen keiner zusätzlichen Durchweichungsphase zu unterziehen ist, **dadurch gekennzeichnet, dass** sie eine Feuchtigkeitsmenge von 27 Gew.-% bis 49 Gew.-% in Bezug auf das Gesamtgewicht der Hülle und eine Salzmenge von 4 Gew.-% bis 20 Gew.-% in Bezug auf das Gesamttrockengewicht der Hülle aufweist, wobei das Salz mit den Vorschriften für Nahrungsmittel und Ausgangsprodukten vereinbar ist.

2. Nicht essbare, stopffertige Kollagenhülle nach Anspruch 1, **dadurch gekennzeichnet, dass** es sich bei dem genannten Salz um Natriumchlorid handelt.

3. Nicht essbare, stopffertige Kollagenhülle nach den Ansprüchen 1 oder 2, bei der die Feuchtigkeitsmenge der Hülle zwischen 33 Gew.-% und 40 Gew.-% in Bezug auf das Gesamtgewicht der Hülle liegt.

4. Nicht essbare, stopffertige Kollagenhülle nach den Ansprüchen 1 bis 3, bei der die Salzmenge der Hülle zwischen 6 Gew.-% und 13 Gew.-% in Bezug auf das Gesamttrockengewicht der Hülle liegt.

5. Nicht essbare, stopffertige Kollagenhülle nach den Ansprüchen 1 bis 4, bei der die Hülle unter Vakuum oder unter Schutzgas verpackt wird.

6. Nicht essbare, stopffertige Kollagenhülle nach Anspruch 5, bei der es sich bei dem Schutzgas um Kohlendioxid, Stickstoff oder einem Gemisch der beiden Gase handelt.

7. Herstellungsverfahren einer nicht essbaren, stopffertigen Kollagenhülle, die vor dem Stopfen keiner zusätzlichen Durchweichungsphase zu unterziehen ist, **dadurch gekennzeichnet, dass** es darin besteht, die Hülle vor dem Verpackungsvorgang über eine Zeit von 2 Sekunden bis zu 60 Sekunden in einer wässrigen Salzlösung einzuweichen, deren Konzentration zwischen 5 % und 25 % liegt, und die erhaltene Hülle zu verpacken.

8. Herstellungsverfahren einer nicht essbaren, stopffertigen Kollagenhülle nach Anspruch 7, bei dem es sich bei dem genannten Salz um Natriumchlorid handelt.

9. Herstellungsverfahren einer nicht essbaren, stopffertigen Kollagenhülle nach Anspruch 7, bei dem die erhaltene Hülle eine Feuchtigkeitsmenge zwischen 27 Gew.-% und 49 Gew.-% in Bezug auf das Gesamtgewicht der Hülle enthält.

10. Herstellungsverfahren einer nicht essbaren, stopffertigen Kollagenhülle nach den Ansprüchen 7 bis 9, bei dem die erhaltene Hülle eine Feuchtigkeitsmenge zwischen 33 Gew.-% und 40 Gew.-% in Bezug auf das Gesamtgewicht der Hülle enthält.

11. Herstellungsverfahren einer nicht essbaren, stopffertigen Kollagenhülle nach den Ansprüchen 7 bis 10, bei dem die Konzentration des Salzes in der wässrigen Salzlösung zwischen 10 % und 20 % liegt.

12. Herstellungsverfahren einer nicht essbaren, stopffertigen Kollagenhülle nach den Ansprüchen 7 bis 11, bei dem die Salzaufnahme der Hülle zwischen 5 Gew.-% und 15 Gew.-% in Bezug auf das Gesamttrockengewicht der Hülle liegt.

13. Herstellungsverfahren einer nicht essbaren, stopffertigen Kollagenhülle nach den Ansprüchen 7 bis 12, bei dem die Eintauchzeit der Hüllen in der Salzlösung zwischen 5 und 30 Sekunden liegt.

14. Herstellungsverfahren einer nicht essbaren, stopffertigen Kollagenhülle nach den Ansprüchen 7 bis 13, bei dem die Hülle im Anschluss unter Vakuum oder unter Schutzgas verpackt wird.

15. Herstellungsverfahren einer nicht essbaren, stopffertigen Kollagenhülle nach Anspruch 14, bei dem es sich bei dem Schutzgas um Kohlendioxid, Stickstoff oder einem Gemisch der beiden Gase handelt.

## Revendications

1. Enveloppe non comestible en collagène prête à farcir, n'ayant pas besoin d'une phase supplémentaire de trempage avant d'être farcie, **caractérisée en ce qu'**elle comprend une quantité d'humidité de 27 à 49% sur le poids total de l'enveloppe et une quantité de sel de 4 à 20% en poids sur le poids total sec de l'enveloppe, ce sel étant compatible avec les normes en matière d'aliments et de produits de base.

2. Enveloppe non comestible en collagène prête à farcir, selon la revendication 1, **caractérisée en ce que** le sel est du chlorure de sodium.

3. Enveloppe non comestible en collagène prête à farcir, selon la revendication 1 ou 2, où la quantité d'humidité de ladite enveloppe oscille de 33 à 40% en poids sur le poids total de l'enveloppe.

4. Enveloppe non comestible en collagène prête à farcir, selon les revendications 1 a 3, où la quantité de sel de ladite enveloppe oscille de 6 à 13% en poids sur le poids total sec de l'enveloppe.

5. Enveloppe non comestible en collagène prête à farcir, selon les revendications 1 à 4, où l'enveloppe a été emballée sous vide ou sous gaz protecteur.

6. Enveloppe non comestible en collagène prête à farcir, selon la revendication 5, où le gaz protecteur est du dioxyde de carbone, de l'azote ou un mélange des deux.

7. Procédé de fabrication d'une enveloppe non comestible en collagène prête à farcir, n'ayant pas besoin d'une phase supplémentaire de trempage avant d'être farcie, **caractérisé en ce qu'**il consiste à tremper l'enveloppe dans une solution aqueuse de sel dont la concentration est de l'ordre de 5 à 25% pendant une période de temps de 2 à 60 secondes avant le processus d'emballage, et à emballer l'enveloppe résultante.

8. Procédé de fabrication d'une enveloppe non comestible en collagène prête à farcir, selon la revendication 7, où le sel est du chlorure de sodium.

9. Procédé de fabrication d'une enveloppe non comestible en collagène prête à farcir, selon la revendication 7, où l'enveloppe résultante contient une quantité d'humidité de l'ordre de 27 à 49% en poids sur le poids total de ladite enveloppe.

10. Procédé de fabrication d'une enveloppe non comestible en collagène prête à farcir, selon les revendications 7 à 9, où l'enveloppe résultante contient une quantité d'humidité de l'ordre de 33 à 40% en poids sur le poids total de ladite enveloppe.

11. Procédé de fabrication d'une enveloppe non comestible en collagène prête à farcir, selon les revendications 7 à 10, où la concentration de sel dans la solution aqueuse de sel est de l'ordre de 10 à 20%.

12. Procédé de fabrication d'une enveloppe non comestible en collagène prête à farcir, selon les revendications 7 à 11, où l'absorption de sel par l'enveloppe oscille de 5 à 15% en poids sur le poids total sec de l'enveloppe.

13. Procédé de fabrication d'une enveloppe non comestible en collagène prête à farcir, selon les revendications 7 à 12, où le temps d'immersion des enveloppes dans la solution de sel oscille de 5 à 30 secondes.

14. Procédé de fabrication d'une enveloppe non comestible en collagène prête à farcir, selon les revendications 7 à 13, où l'enveloppe est ensuite emballée sous vide ou sous gaz protecteur.

15. Procédé de fabrication d'une enveloppe non comestible en collagène prête à farcir, selon la revendication 14, où le gaz protecteur est du dioxyde de carbone, de l'azote ou un mélange des deux.
